# EUROPEAN PATENT APPLICATION

(11) **EP 4 588 549 A1**
(43) Date of publication of application: **23.07.2025**
(21) Application number: 24152291.1
(22) Date of filing: 17.01.2024
(51) Int. Cl.: B01D 46/02, B01D 46/121

(54) **POCKET FILTER AND CLAMPING STRIP FOR THE POCKET FILTER**

(71) Applicant: MANN+HUMMEL LIFE SCIENCES & ENVIRONMENT HOLDING SINGAPORE PTE. LTD., Singapore 139234 (SG)
(72) Inventor: POWER, Joseph, 71636 Ludwigsburg (DE); BRINKMANN, Marius, 45549 Sprockhövel (DE); JOHNSSON, Magnus, 51285 Svenljunga (SE)
(74) Representative: Mann + Hummel Intellectual Property

(57) **Abstract**

The invention relates to a pocket filter (1) with a plurality of filter pockets (20, 21, 22, 23), with a frame (10) holding the filter pockets (20, 21, 22, 23) and with at least one clamping strip (30), which fixes filter layers (24, 25) of two neighbouring filter pockets (20, 21), wherein a profile of the clamping strip (30) is designed in one piece and has a first section (31) and a second section (32), which are movably connected to one another, wherein a T-shaped locking element (36) is formed on the first section (31), wherein the T-shaped locking element (36) has a base (37) and a cross-piece (38) extending substantially perpendicularly to the base (37), wherein a proximal hook-shaped locking element (44) and a distal hook-shaped locking element (47) are formed on the second section (32), between which the T-shaped locking element (36) is arranged and which engage behind the cross-piece (38) when the clamping strip (30) is in a locked state in which the filter layers (24, 25) of the two adjacent filter pockets (20, 21) are clamped in the clamping strip (30). The invention is characterised in that, during a swivelling movement from a non-locked resting state of the clamping strip (30) into the locked state, a proximal leg (39) of the cross-piece (38) comes into contact with the proximal hook-shaped locking element (44) and only then a distal leg (40) of the cross-piece (38) comes into contact with the distal hook-shaped locking element (47). Furthermore, the invention relates to the clamping strip (30) for the pocket filter (1).

## Description

The invention relates to a pocket filter. The invention also relates to a clamping strip for such a pocket filter.

DE 10 2017 008 190 A1 discloses a pocket filter with several filter pockets and a rectangular frame that holds the filter pockets. In order to connect and fix a filter layer of a filter pocket and a filter layer of a neighbouring filter pocket within the frame, a clamping strip is provided which is connected to the frame and extends between two parallel struts of the frame. The profile of the clamping strip has a first section and a second section, which can be stuck together by a substantially linear movement. In an embodiment of DE 10 2017 008 190 A1, the sections are constructed identically in order to reduce manufacturing costs and each have a hook-shaped locking element, whereby the two hook-shaped locking elements form a locking connection when the two sections are plugged together Before they are stuck together, the filter layers of the neighbouring filter pockets are positioned between the sections so that the filter layers are clamped in the clamping strip once the sections have been stuck together and locked.

DE 10 2006 048 695 A1 discloses a pocket filter with a clamping strip, the profile of which also has a first section and a second section. The two sections are connected to each other in one piece via a film hinge. A T-shaped locking element is formed on the first section, which has a base and a cross-piece in the form of a mushroom head extending essentially perpendicular to the base. A proximal hook-shaped locking element and a distal hook-shaped locking element are formed on the second section. When the clamping strip is in a locked state, the T-shaped locking element is arranged between the hook-shaped locking elements and is engaged behind them. In the locked state, the filter layers are clamped between the engaged locking elements. The film hinge forms a swivel axis about which the first section can be swivelled relative to the second section in order to transfer the clamping strip from an unlocked resting state to the locked state.

When the pocket filter is in operation, the medium to be filtered flows through the filter pockets, whereby the flow resistance in the filter pockets increases due to the particles filtered out. The greater flow resistance increases the risk of the filter layers being pulled out of the clamping strip. If the filter layers are pulled out of the clamping strip, the medium can flow through the pocket filter without being filtered.

When manufacturing the pocket filter, the insertion of the filter layers into the still open clamping strip and the closing of the clamping strip, i.e. the swivelling of the sections to achieve the locked state, is often carried out automatically. The clamping strip should therefore be designed in such a way that it is easy to automatically insert the filter layers and lock the sections of the clamping strip.

The invention is based on the object to provide a pocket filter that functions safely and efficiently and is easy to manufacture.

The object underlying the invention is solved by the combination of features according to claim 1. Embodiments of the invention can be taken from the subclaims to claim 1.

According to the invention, it is provided that during a swivelling movement starting from the non-locked resting state of the clamping strip into the locked state, a proximal leg of the cross-piece of the T-shaped locking element first comes into contact with the proximal hook-shaped locking element and that only then a distal leg of the cross-piece comes into contact with the distal hook-shaped locking element. Before the start of the swivelling movement, the filter layers are positioned between the sections in such a way that the filter layers are clamped at the contact surface at which the cross-piece with the proximal leg pushes against the proximal locking element. At this stage of the swivelling movement, however, there is still no contact between the distal leg of the cross-piece and the distal locking element, so that as the swivelling movement continues, the filter layers can be pulled by the T-shaped locking element into an interspace between the proximal locking element and the distal locking element. This ensures that the filter layers are located between the T-shaped locking element and the hook-shaped locking elements in the locked state of the clamping strip and are securely clamped there. The invention can thus reduce the risk of the filter layers slipping out of the clamping strip when the clamping strip is closed.

In one embodiment, the first section and the second section are connected in one piece. The one-piece clamping strip is preferably made of plastic. The clamping strip can therefore be produced particularly easily as an endless and one-piece extrusion part, which only needs to be cut into pieces after extrusion.

A connecting section can connect the first section and the second section to each other. The first section preferably merges seamlessly into the connecting section, which in turn preferably merges seamlessly into the second section. The connecting section has an elasticity that allows the first section to be swivelled relative to the second section.

The connecting section, the first section and the second section can have an essentially constant wall thickness. In this embodiment, a film hinge with reduced wall thickness can be omitted, which can break quickly and can make the production of the clamping strip more difficult.

In the resting state of the clamping strip, in which the clamping strip is unloaded and not subject to any stresses, an opening angle between the first section and the second section can be between 45° and 110°. In the locked state of the clamping strip, the first section and the second section can run essentially parallel. In the embodiment with the connecting section between the first section and the second section and an assumed opening angle of, for example, 90° between the first section and the second section, the connecting section can have the shape of a quarter circle. Starting from this, the connecting section is then bent by the swivelling movement until the first section and the second section are parallel. The connecting section then covers an angular range of approx. 180° when the clamping strip is locked.

Together with the two other sections, the bent connecting section forms a drop-shaped body that causes only minor flow losses in the pocket filter. During the swivelling movement, the first section and the second section can also be deformed.

If the requirement for the clamping strip is mainly to reduce the flow resistance in combination with a simple design of the clamping strip, this requirement can be met with a clamping strip according to the preamble of claim 1 with the additional features that the connecting section connects the first section and the second section in one piece and that the connecting section, the first section and the second section have a substantially constant wall thickness.

By selecting the angle between the first section and the second section at rest, the degree of tension that prevails in the clamping strip in the locked state can be set. The closer the opening angle between the sections in the resting state is to the angle between the sections in the locked state, the less the connecting section needs to be deformed, which leads to lower tension in the locked state.

A material reinforcement can be provided in a transition area between the base of the T-shaped locking element and the first section. Alternatively or additionally, a (further) material reinforcement can be provided in a transition area between the base of the T-shaped locking element and the cross-piece. The material reinforcement or material reinforcements increase the rigidity of the T-shaped locking element so that the proximal leg of the cross-piece can yield less elastically when it hits the proximal locking element of the second section during the swivelling movement. The clamping force with which the filter layers are then held between the proximal leg and the proximal locking element is correspondingly greater. An outer side of the proximal leg is in contact with an outer side of a hook head of the proximal hook-shaped locking element. In addition to the hook head, the proximal hook-shaped locking element also has a hook base that extends from the second section to the hook head.

In one embodiment, an angle between the proximal leg and the base of the T-shaped locking element is less than 90°. Preferably, the angle is 65° to 80°. Such an angle ensures that in the locked state, when the T-shaped locking element is arranged in the interspace between the two hook-shaped locking elements, the filter layers located between an inner edge of the proximal leg and an inner edge of the hook head of the proximal hook-shaped locking element are held securely.

In order to simplify the engagement of the T-shaped locking element in the proximal hook-shaped locking element during the swivelling movement, an outer edge of the proximal leg can be rounded. An outer edge of the hook head of the proximal hook-shaped locking element can also be rounded. The filter layers are subject to a longer duration of the swivelling movement at the first contact points between the outer edge of the proximal leg and the outer edge of the hook head of the proximal hook-shaped locking element. Thus, the first contact points are rounded to decrease friction on the filter layers during the swivelling movement. Consequently, the filter layers are less likely to tear.

The inner edge of the proximal leg of the cross-piece can be sharp-edged. Alternatively or additionally, the inner edge of the hook head of the proximal hook-shaped locking element can be sharp-edged. The sharp-edged inner edges, which face each other in the locked state and between which the filter layers run, increase the force that must be overcome to pull the filter layers out of the closed clamping strip. The sharp-edged inner edges can claw into the material of the filter layers.

An outer edge of the distal leg of the cross-piece can be sharp-edged. During the swivelling movement, the cross-piece hits the distal hook-shaped locking element with a certain time delay after the proximal leg hits the proximal hook-shaped locking element. The outer edge comes into contact with a hook head of the distal hook-shaped locking element. The sharp-edged outer edge of the distal leg hooks into the filter layers, effectively taking the filter layers with it into the interspace between the two hook-shaped locking elements. An inner edge of the distal leg of the cross-piece can be rounded, which favours gentle spring-back when the locking elements engage.

Like the proximal locking element, the distal hook-shaped locking element has further a hook base. An inner edge of the hook head can be sharp-edged. Here too, the sharp edge serves to hold the filter layers securely in the interspace between the two hook-shaped locking elements when locked. An angle enclosed by the hook head and the hook base can be between 60° and 80°. A smaller angle means that the distal leg can displace the hook head of the distal hook-shaped locking element with less force when it engages. Thus, while the sharp-edged outer edge of the distal leg hooks and takes the filter layers pass the distal hook-shaped locking element, the smaller angle enclosed by the distal hook head and its hook base prevents too much stretching of the filter layers.

A further object of the invention, the provision of a clamping strip for the pocket filter described here, is solved by the combination of features according to claim 12. With regard to the structure and interaction of the individual components of the clamping strip according to the invention, reference is made to the description of the pocket filter according to the invention.

The invention is explained in more detail with reference to the embodiments shown in the drawing. It is shown in:
- Figure 1: schematically a pocket filter with filter pockets and frame;
- Figure 2: a cross-section of the pocket filter in Figure 1 additionally with clamping strips;
- Figure 3: a clamping strip in an unloaded resting state for the pocket filter of Figure 1 ;
- Figure 4: in cross-section, the clamping strip of Figure 3 in a locked state (Figure 4A without filter layers; Figure 4B with clamped filter layers); and
- Figure 5: the clamping strip of Figure 3 in two different phases of a swivelling movement in order to transfer the clamping strip from the resting state to the locked state (Figures 5A and 5B).

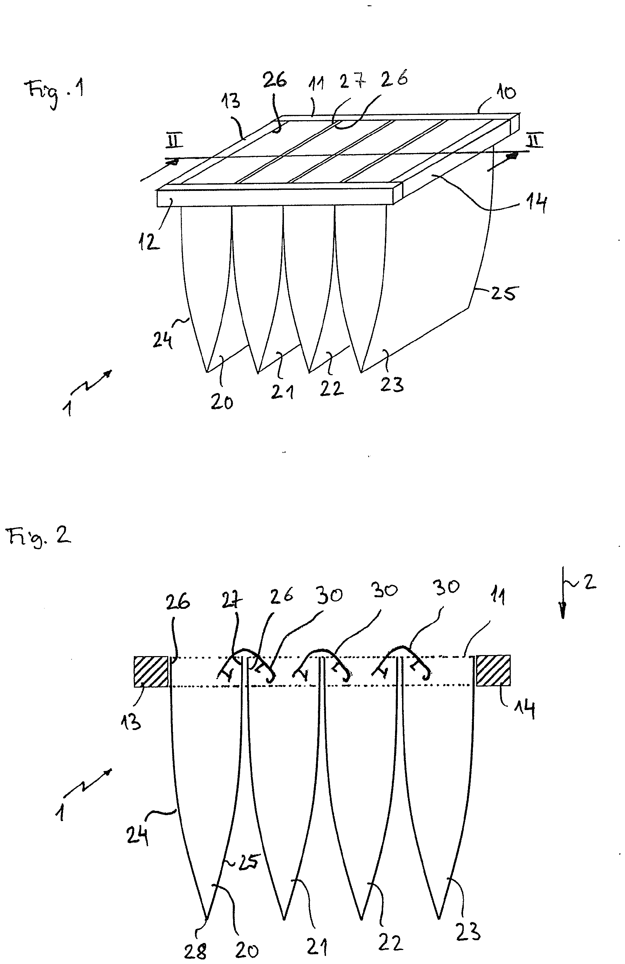

Figure 1 and Figure 2 show a pocket filter 1. Figure 2 shows a section perpendicular to the plane in which the straight line II-II in Figure 1 lies. The pocket filter comprises a frame 10 and four filter pockets 20, 21, 22, 23, which are held by the frame 10. The frame 10 has two parallel cross struts 11, 12 and two longitudinal struts 13, 14. The longitudinal struts 13, 14 and the cross struts 11, 12 form a rectangle. The cross strut 11 is indicated by dashed lines in Figure 2.

The filter pocket 20 has two filter layers 24, 25, which are connected to each other at an lower end 28 facing away from the frame 10 (see Figure 2). The filter pockets 21, 22, 23 have the same structure as the filter pocket 20. The description of filter pocket 20 can therefore be applied analogously to the other filter pockets 21, 22, 23.

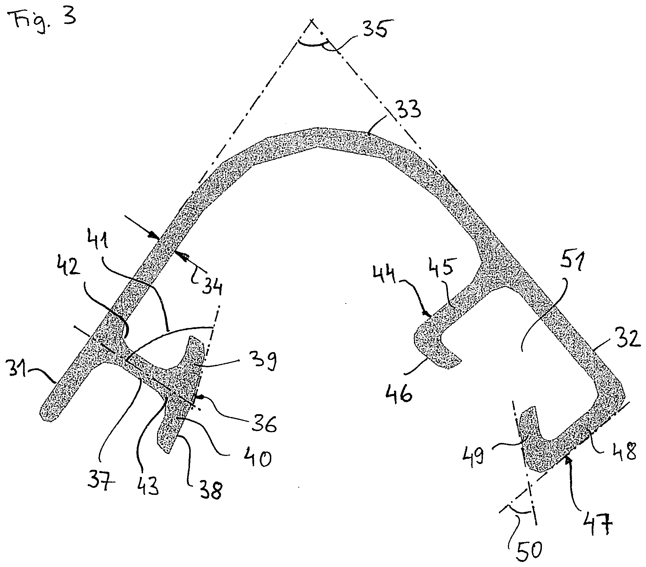

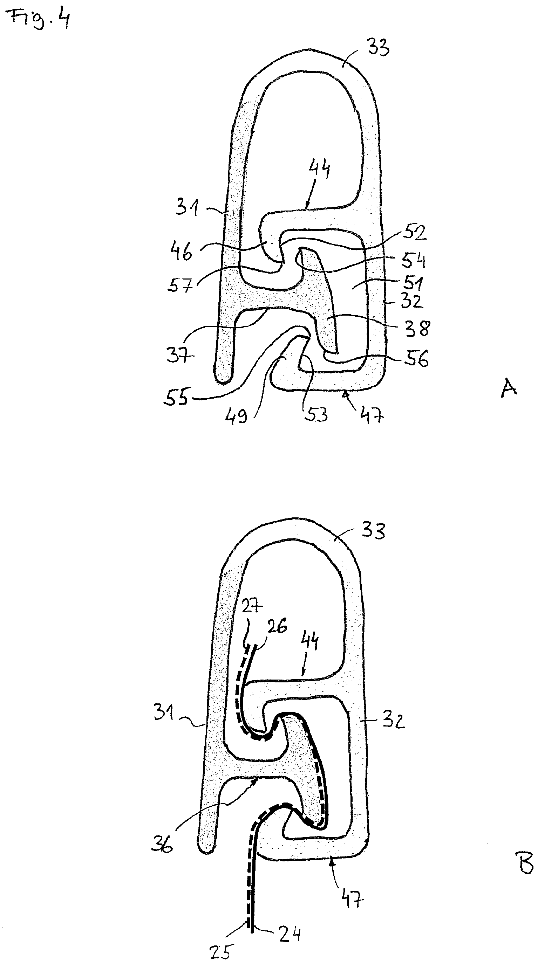

The filter layer 24 has an upper edge 26 that lies in the plane of the frame 10. The upper edge 26 of the filter layer 24 of the filter pocket 20 is attached to the longitudinal strut 13 of the frame 10. An upper edge 27 of the filter layer 25 of the filter pocket 20 and the upper edge 26 of the filter layer 24 of the neighbouring filter pocket 21 are adjacent to each other and extend from the cross strut 11 to the other cross strut 12. A clamping strip 30, which is not shown in Figure 1, serves to securely connect the filter layers 25, 24 of the filter pockets 20, 21 to each other. The clamping strip 30 is shown in Figure 2 in an open or unlocked resting state. A more detailed description of the clamping strip 30 is given in Figures 3 to 5, from which it is clear that the upper edges 27, 26 are only securely clamped in the clamping strip 30 in a locked state (see Figure 4).

Figure 2 shows three clamping strips that are required to secure the four filter pockets. The number x of filter pockets and thus the number x-1 of clamping strips is basically arbitrary. The clamping strip 30, the length of which corresponds approximately to the length of the longitudinal struts 13, 14, is supported by its ends on the cross struts 11, 12. Corresponding receptacles or recesses on the cross struts 11, 12 for fastening the clamping strips 30 are not shown in Figure 1.

If a medium to be cleaned (e.g. air) flows through the pocket filter in the direction 2, a certain tensile force acts on the upper edges 26, 27 of each filter pocket 20, 21, 22, 23 due to the flow resistance. If the upper edges 27, 26 of neighbouring filter pockets are not held securely by the clamping strip 30, the filter layers 25, 24 of the neighbouring filter pockets 20, 21 can slip out of the clamping strip. The resulting gap between the no longer fixed edges 27, 26 can allow the medium to be cleaned to pass through the pocket filter 1 unfiltered, which should be avoided.

Figure 3 shows the one-piece profile of the clamping strip 30 in an unloaded and unlocked resting state. The clamping strip 30 can be manufactured as a continuous product using an extrusion process, whereby the endless product, preferably made of plastic, exits the extruder in the form shown in Figure 3. The endless product then only needs to be cut into smaller pieces to obtain the individual clamping strips 30.

The profile of the clamping strip 30 has an approximately rectilinear first section 31, an approximately rectilinear second section 32 and a curved connecting section 33, which connects the sections 31, 32 to one another. A thickness 34 is the same for all sections 31, 32, 33 and can be a few tenths of a millimetre. In the resting state, an opening angle 35 between the first section 31 and the second section 32 is between 70 and 75°. In a locked state (see Figure 4), the sections 31, 32 are almost parallel. The corresponding angle between the sections 31, 32 in the locked state is 0° or deviates only slightly from this.

A T-shaped locking element 36 is formed on the first section 31 and has a base 37 and a cross-piece 38. The base 37 extends at a right angle from the first section 31. The cross-piece 38 has a proximal leg 39 directed towards the connecting section 33 and a distal leg 40 facing away from the connecting section. While the distal leg 40 runs essentially perpendicular to the base 37, the proximal leg 39 and the base 37 form an angle 41 of 65 to 75°. A material reinforcement 42 between the first section 31 and the base 37 and a material reinforcement 43 between the base 37 and the cross-piece 38 increase the rigidity of the T-shaped locking element 37.

A proximal hook-shaped locking element 44 is formed on the second section 32, which has a hook base 45 and a hook head 46. The hook head 46 forms an angle of approximately 90° with the hook base 45.

A distal hook-shaped locking member 47 is formed on an outer end of the second portion 32 and, like the proximal locking member 44, has a hook base 48 and a hook head 49. An angle 50 between the hook head 49 and the hook base 48 (see corresponding alternating angle) is preferably in a range of 55 to 65°.

The two locking elements 44, 47 delimit an interspace 51 into which the cross-piece 38 of the T-shaped locking element 37 enters when the first section 31 is bent in the direction of the second section 32 by a swivelling movement about an imaginary swivel axis, the position of which can change during the swivelling movement. This swivelling movement allows the clamping strip to be transferred from the unloaded resting state (Figure 3) to the locked state (Figure 4). The two sections are pressed together by the swivelling movement, whereby it is irrelevant whether the first section 31, the second section 32 or both sections 31, 32 are moved simultaneously. When the connecting section 33 is deformed, the sections 31, 32 can also be slightly deformed.

Figure 4A shows the clamping strip 30 in the locked state. The cross-piece 38 lies in the interspace 51. The hook heads 46, 49 of the hook-shaped locking elements engage behind the cross-piece 38. Figure 4A shows the locked state only schematically. Due to the restoring forces of the previously merely curved and now elastically deformed connecting section 33, the cross-piece 38 would rest against an inner side 52 of the hook head 46 and an inner side 53 of the hook head 49.

Figure 4B shows the clamping strip 30 with the filter layers 25, 24 of neighbouring filter pockets 20, 21 clamped therein (see also Figure 2). Due to the restoring forces of the bent connecting section 33, the filter layers 25, 24 are clamped between a sharp-edged inner edge 57 of the hook head 46 of the proximal connecting element 44 and a sharp-edged inner edge 54 of the proximal leg 39 of the cross-piece 38. Furthermore, the filter layers are also clamped between a sharp-edged inner edge 55 of the hook head 49 of the distal locking element 47 and a rounded inner edge 56 of the distal leg 40.

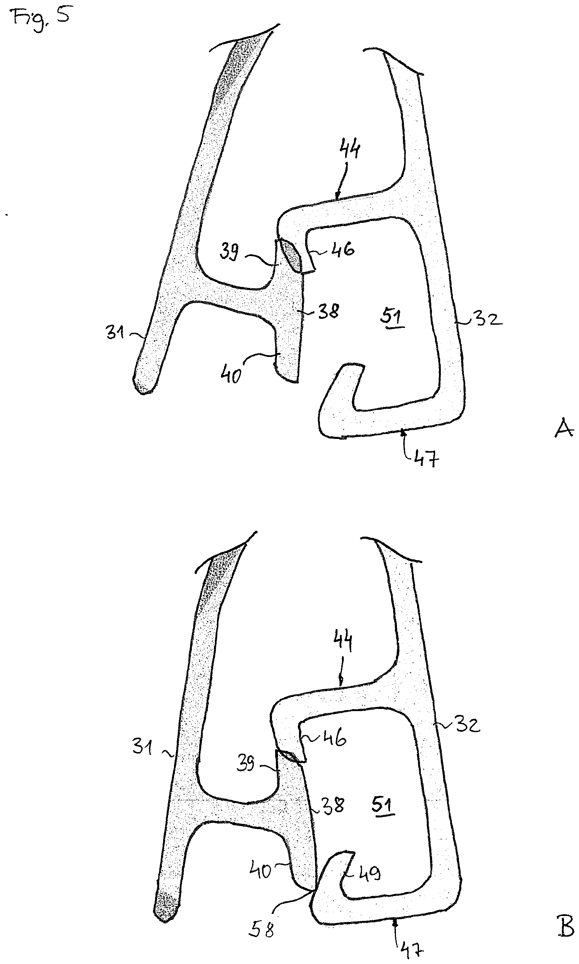

Figures 5A and 5B show different phases of the swivelling movement by which the sections 31, 32 are moved towards each other. The connecting section is cut away in Figure 5. Figure 5A shows a phase in which the proximal leg 39 of the cross-piece 38 abuts against the hook head 46 of the proximal hook-shaped locking element 44. The abutment surfaces of the proximal leg 39 of the cross-piece 38 and the hook head 46 of the proximal hook-shaped locking element 44 are rounded. In this phase, there is still no contact between the distal leg 40 of the cross-piece 38 and the distal locking element 47. The overlapping of the proximal leg 39 and the hook head 46 shown in Figure 5A is intended to illustrate that both parts deform elastically or move out of the way when they meet. The filter layers 25, 24, which are placed between the sections 31, 32 before the swivelling movement so that the top edges 27, 26 point in the direction of the connecting section 33, are not shown in Figure 5 for the sake of clarity. The filter layers are located between the proximal leg 39 and hook head 46 and are firmly clamped at this contact point.

When the sections 31, 32 are further pressed together (see phase of Figure 5B, which follows the phase of Figure 5A), the proximal leg 39 slides along the hook head 46 in the direction of the distal locking element 47 until the distal leg 40 of the cross-piece 38 also comes into contact. However, the proximal leg 39 remains in constant pressing contact with the hook head 46 so that the clamped filter layers 25, 24 cannot slip out of the clamping strip 30 during the swivelling process. As a sharp-edged outer edge 58 of the distal leg 40 slides along the hook head 49, the filter layers 27, 26 are pulled into the interspace 51. Due to the inclination of the hook head 49 (see angle 50 in Figure 3), the cross-piece 38 slides gently into the interspace 51 and finally engages behind the hook heads 46, 49. During the entire engagement process, which begins with the state shown in Figure 5A and ends with the locked state shown in Figure 4 via the state shown in Figure 5B, the filter layers 25, 24 are held securely between the sections 31, 32 and cannot escape when the clamping strip 30 is closed. This simplifies the (automatic) clamping of the filter layers 25, 24 in the clamping strip 30 and ensures that the filter layers 25, 24 are held securely during operation of the pocket filter 1.

### List of reference signs

- 1: Pocket filter
- 2: Flow direction
- 10: Frame
- 11: Cross strut
- 12: Cross strut
- 13: Longitudinal strut
- 14: Longitudinal strut
- 20: Filter pocket
- 21: Filter pocket
- 22: Filter pocket
- 23: Filter pocket
- 24: Filter layer
- 25: Filter layer
- 26: Upper edge
- 27: Upper edge
- 28: Lower end
- 30: Clamping strip
- 31: First section
- 32: Second section
- 33: Connection section
- 34: Thickness
- 35: Opening angle
- 36: T-shaped locking element
- 37: Base
- 38: Cross-piece
- 39: Proximal leg
- 40: Distal leg
- 41: Angle
- 42: Material reinforcement
- 43: Material reinforcement
- 44: Proximal hook-shaped locking element
- 45: Hook base
- 46: hook head
- 47: Distal hook-shaped locking element
- 48: Hook base
- 49: Hook head
- 50: Angle
- 51: Interspace
- 52: Inner surface
- 53: Inner surface
- 54: Outer edge
- 55: Inner edge
- 56: Inner edge
- 57: Inner edge
- 58: Outer edge

## Claims

1. Pocket filter (1) with a plurality of filter pockets (20, 21, 22, 23), with a frame (10) holding the filter pockets (20, 21, 22, 23) and with at least one clamping strip (30), which fixes filter layers (24, 25) of two neighbouring filter pockets (20, 21), wherein a profile of the clamping strip (30) is designed in one piece and has a first section (31) and a second section (32), which are movably connected to one another, wherein a T-shaped locking element (36) is formed on the first section (31), wherein the T-shaped locking element (36) has a base (37) and a cross-piece (38) extending substantially perpendicularly to the base (37), wherein a proximal hook-shaped locking element (44) and a distal hook-shaped locking element (47) are formed on the second section (32), between which the T-shaped locking element (36) is arranged and which engage behind the cross-piece (38) when the clamping strip (30) is in a locked state in which the filter layers (24, 25) of the two adjacent filter pockets (20, 21) are clamped in the clamping strip (30), **characterised in that**, during a swivelling movement from a non-locked resting state of the clamping strip (30) into the locked state, a proximal leg (39) of the cross-piece (38) comes into contact with the proximal hook-shaped locking element (44) and only then a distal leg (40) of the cross-piece (38) comes into contact with the distal hook-shaped locking element (47).

2. Pocket filter (1) according to claim 1, **characterised in that** a connecting section (33) connects the first section (31) and the second section (32).

3. Pocket filter (1) according to claim 2, **characterised in that** the connecting section (33), the first section (31) and the second section (32) have a substantially constant thickness.

4. Pocket filter (1) according to one of claims 1 to 3, **characterised in that** in the resting state of the clamping strip (30) an opening angle between the first section (31) and the second section (32) is 45° and 110°.

5. Pocket filter (1) according to one of claims 1 to 4, **characterised in that** in the locked state of the clamping strip (1) the first section (31) and the second section (32) run essentially parallel.

6. Pocket filter (1) according to one of claims 1 to 5, **characterised in that** a material reinforcement (42) is provided in a transition region between the base (37) of the T-shaped locking element (36) and the first section (31).

7. Pocket filter (1) according to one of claims 1 to 6, **characterised in that** a material reinforcement (43) is provided in a transition region between the base (37) of the T-shaped locking element (36) and the cross-piece (38).

8. Pocket filter according to one of claims 1 to 7, **characterised in that** an angle (41) between the proximal leg (39) and the base (37) of the T-shaped locking element (36) is 65° to 80°.

9. Pocket filter (1) according to one of claims 1 to 8, **characterised in that** an outer edge of the proximal leg (39) is rounded and an inner edge (54) of the proximal leg (39) is sharp-edged.

10. Pocket filter (1) according to one of claims 1 to 9, **characterised in that** an outer edge (58) of the distal leg (40) of the cross-piece (38) is sharp-edged and an inner edge of the distal leg (40) of the cross-piece (38) is rounded.

11. Pocket filter (1) according to one of claims 1 to 10, **characterised in that** the proximal hook-shaped locking element (44) has a hook base (45) and a hook head (46), wherein an inner edge (57) of the hook head (46) is sharp-edged.

12. Pocket filter (1) according to one of claims 1 to 11, **characterised in that** the distal hook-shaped locking element (47) has a hook head (49) and a hook base (48), wherein an inner edge (55) of the hook head (49) is sharp-edged and/or an angle (50) formed by the hook head (49) and the hook base (48) is between 60° and 80°.

13. Clamping strip (30) for a pocket filter (1) according to one of claims 1 to 12.
